# EUROPÄISCHE PATENTANMELDUNG

(11) **EP 3 299 995 A1**
(43) Veröffentlichungstag der Anmeldung: **28.03.2018**
(21) Anmeldenummer: 17171198.9
(22) Anmeldetag: 16.05.2017
(51) Int. Cl.: G06K 9/00, G06T 7/11, G06K 9/42, G06K 9/46, G06K 9/62, A01B 69/04, A01B 79/00

(54) **BILDANALYSESYSTEM FÜR LANDWIRTSCHAFTLICHE ARBEITSMASCHINEN**

(30) Priorität: 27.09.2016 DE 102016118227
(71) Anmelder: CLAAS Selbstfahrende Erntemaschinen GmbH, 33428 Harsewinkel (DE)
(72) Erfinder: Neitemeier, Dennis, 59510 Lippetal (DE); Krause, Thilo, 39249 Glinde (DE); Kettelhoit, Boris, Dr., 33335 Gütersloh (DE); Skiba, Andreas, 33647 Bielefeld (DE); Korthals, Timo, 33613 Bielefeld (DE)

(57) **Zusammenfassung**

Bildverarbeitungssystem (1) zumindest eine Auswahl verfügbarer Bilder (7), eine Bildanalyseeinheit (17) und eine Datenausgabeeinheit (21) umfassend, wobei das Bildverarbeitungssystem (1) eine Anzahl von Bildern (7) akquiriert, die akquirierten Bilder (12) in einem ersten Schritt (S1) vorverarbeitet, in einem weiteren Schritt (S2) die vorverarbeiteten Bilder (13) segmentiert, und die entstehenden Segmente (16) in einem nächsten Schritt (S3) klassifiziert, sodass Anomalien (19) identifizierbar sind, und in einem folgenden Schritt (S4) einen weiterverarbeitbaren Bilddatensatz (20) generiert.

## Beschreibung

Die vorliegende Erfindung betrifft ein Bildverarbeitungssystem gemäß dem Oberbegriff des Anspruchs 1.

Das Übersehen von Hindernisse im Umfeld der landwirtschaftlichen Arbeitsmaschine, wie zum Beispiel ein Autoreifen im Erntebestand, kann zu Beschädigungen der landwirtschaftlichen Arbeitsmaschine führen. Des Weiteren können Unregelmäßigkeiten im Erntebestand, wie zum Beispiel Unkrautpflanzen, zur Minderung der Qualität des abgeernteten Erntegutes führen. Eine manuelle Steuerung der landwirtschaftlichen Arbeitsmaschine, zum Beispiel während einer Ernte, erfordert deshalb die ständige Aufmerksamkeit des Fahrzeugführers.

Während ein automatische Routenführungen mittels GPS oder topographischer Karten den Aufwand für die Steuerung der landwirtschaftliche Arbeitsmaschine verringert, können unbekannte neue Hindernisse oder aktuelle Unregelmäßigkeiten im Erntebestand von diesen Systemen nicht erfasst werden. Somit bleibt das Erfordernis zur ständigen Aufmerksamkeit des Fahrzeugführers weitestgehend bestehen. Um frühzeitig vor Hindernissen und Unregelmäßigkeiten gewarnt zu werden sind deshalb lokale Sensoren, vorzugsweise direkt an der landwirtschaftlichen Arbeitsmaschine, erforderlich, die das Umfeld überwachen.

Die Druckschrift EP 2 143 316 A1 offenbart ein System zur frühzeitigen Erfassung von Erntegutflussproblemen oder Fremdkörpern im Erntegutfluss und zur teilweisen automatischen Steuerung einer selbstfahrenden Erntemaschine oder deren Arbeitselementen. Dazu wird der Erntegutfluss mittels Sensoren, zum Beispiel einer Kamera, überwacht. Es werden zwei Bildauswerteverfahren vorgeschlagen. Das erste Bildauswerteverfahren stellt Unregelmäßigkeiten im Erntegutfluss mittels Bewegungsunschärfen dar. Das zweite Bildauswerteverfahren erfasst eine Verschiebung von Erntegutmerkmalen mittels eines Bildvergleichsverfahrens aufeinanderfolgender Bilder zur Ermittlung von zum Beispiel Fremdkörpern. Nachteilig an den vorgeschlagenen Systemen ist, dass Sie keine Objekte oder Anomalien identifizieren.

Die Druckschrift US 2015/0319911 A1 offenbart ein analoges Verfahren zur Druckschrift EP 2 143 316 A1. Zusätzlich kann das Verfahren Landmarken im Umfeld detektieren. Hindernisse werden jedoch nicht erfasst oder identifiziert.

Aufgabe der Erfindung ist es, die beschriebenen Nachteile des Standes der Technik zu beheben und insbesondere ein Bildverarbeitungssystem zu schaffen, das Anomalien, insbesondere Hindernisse und/oder Unregelmäßigkeiten im Erntebestand, zuverlässig und schnell erfasst und identifiziert.

Indem ein Bildverarbeitungssystem zumindest eine Auswahl verfügbarer Bilder, eine Bildanalyseeinheit und eine Datenausgabeeinheit umfasst, und das Bildverarbeitungssystem eine Anzahl von Bildern akquiriert, die akquirierten Bilder in einem ersten Schritt vorverarbeitet, in einem weiteren Schritt die vorverarbeiteten Bilder segmentiert, und die entstehenden Segmente in einem nächsten Schritt klassifiziert, sodass Anomalien identifizierbar sind, und in einem folgenden Schritt einen weiterverarbeitbaren Bilddatensatz generiert, wird sichergestellt, dass Anomalien zuverlässig und schnell erfasst und identifiziert werden. Vorzugsweise werden die Anomalien vom Bildverarbeitungssystem automatisch identifiziert. Ein visuelles Identifizieren von Anomalien durch den Fahrzeugführer entfällt. Der Fahrzeugführer wird entlastet. Auch ein alternatives manuelles Zuweisen von Bezeichnungen von Anomalie zu erfassten unbestimmten Objekten entfällt. Durch das Klassifizieren wird erfassten Objekten jeweils eine für den Anwender klare Information zugeordnet. Es hat sich zudem gezeigt, dass durch das vorherige Segmentieren des Bildes das Klassifizieren und Identifizieren beschleunigt werden, wodurch das Verfahren eine nahezu laufzeitfähige Identifizierung von Anomalien ermöglicht und eine erforderliche Computerrechenleistung senkt. Das Vorverarbeiten hingegen erhöht die Reproduzierbarkeit und damit die Zuverlässigkeit des Bildverarbeitungssystems. Zudem wird das Bildanalysesystem durch das Vorverarbeiten in der Regel beschleunigt.

In einer vorteilhaften Ausgestaltung der Erfindung werden die Bilder von mindestens einem optischen Sensor, insbesondere mindestens einer Kamera, wobei die mindestens eine Kamera als eine Monochromkamera, eine Infrarotkamera und/oder als eine Farbkamera ausgebildet ist, erzeugt. Dadurch stehen kontinuierlich aktuelle Bilder für das Bildverarbeitungssystem zu Verfügung. Insbesondere steht eine Information über die Intensität und/oder eine Farbe zur Verfügung. Zudem wird im Falle von mehreren Sensoren ein größerer Bereich der Umgebung abgedeckt.

In einer weiteren vorteilhaften Ausgestaltung der Erfindung umfasst der mindestens eine optische Sensor mindestens einen Laserscanner und/oder mindestens einen Radarsensor. Durch Nutzung von diesen optischen Sensoren werden Bilddaten, die zum Beispiel durch Kamerabilder erzeugt werden, erweitert. So stehen dann z.B. Entfernungsmessungen basierend auf Signallaufzeiten und/oder Bilddaten zu abgeschatteten/verdeckten Anomalien zur Verfügung.

Damit das Bildverarbeitungssystem die Auswahl verfügbarer Bilder auf einfache Weise digital verarbeiten kann, ist in einer vorteilhaften Ausgestaltung jedes Bild aus Pixeln aufgebaut und jedes Pixel weist bevorzugt eine Intensität auf, wobei insbesondere jedes Pixel ein Monochrompixel oder ein Farbpixel ist, wobei gleiche Farbpixel des Bildes jeweils einem Farbkanal des Bildes zugeordnet sind und/oder Monochrompixel des Bildes einem Graukanal des Bildes zugeordnet sind, und aus den Intensitäten unterschiedlicher Farbpixel Farben ausbildbar sind, wobei jede Farbe zu einem Grauwert umwandelbar ist.

Um eine reproduzierbares Ergebnis zu schaffen, welches unabhängig von Umgebungsbedingen wie Schattenwurf durch zum Beispiel Bäume, einer Tageszeit, Witterungsbedingungen und/oder Jahreszeiten ist, umfasst in dem ersten Schritt das Vorverarbeiten der akquirierten Bilder gemäß einer weiteren vorteilhaften Ausgestaltung mindestens eine Normierung der akquirierten Bilder, insbesondere eine Intensitätsnormierung und/oder eine Farbnormierung, und/oder eine Auswahl des Auswertebereichs in den akquirierten Bildern. Des Weiteren wird dadurch eine folgende Segmentierung vereinfacht.

In einer bevorzugten Ausgestaltung wird bei der Intensitätsnormierung jeweils ein pixelspezifischer Intensitätskorrekturfaktor für jedes Pixel mittels mindestens eines Referenzbildes bestimmt, und die Intensität jedes Pixels der akquirierten Bilder mit dem jeweiligen pixelspezifischen Intensitätskorrekturfaktor korrigiert. Dadurch lassen sich Intensitätsfehler hervorgerufen durch Objektivfehler der Kamera, insbesondere bei Weitwinkel-Objektiven, oder durch Reflexionen stark reflektierender Flächen, wie zum Beispiel lackierter Teile einer landwirtschaftlichen Arbeitsmaschine, auf einfache Weise korrigieren.

In einer weiteren bevorzugten Ausgestaltung wird bei der Farbnormierung jeweils ein Intensitätskorrekturwert für jeden Farbkanal der akquirierten Bilder ermittelt und die Intensitäten der Pixel jedes Farbkanals einheitlich um den jeweiligen Intensitätskorrekturwert korrigiert, wobei jeder Intensitätskorrekturwert mittels Bestimmung einer Differenz der gemessenen jeweiligen Intensitäten der dem jeweiligen Farbkanal zugeordneten Farbpixel eines Referenzobjekts mit bekannter Farbe in den akquirierten Bildern zu den bekannten jeweiligen Intensitäten der dem jeweiligen Farbkanal zugeordneten Farbpixel eines Referenzobjekts mit bekannter Farbe in den akquirierten Bildern ermittelt wird, wobei die gemessenen jeweiligen Intensitäten insbesondere aus einer Auswahl von Farbpixel des Referenzobjekts mit bekannter Farbe und durch Bildung eines Mittelwerts aus ihnen ermittelt werden. Dadurch wird die Farbechtechtheit sichergestellt und insbesondere Farbverfälschungen durch verschiedene Lichtbedingungen und/oder Kameraeinstellungen vermieden.

In einer weiteren bevorzugten Ausgestaltung umfasst die Auswahl des Auswertebereichs der akquirierten Bilder jeweils einen Ausschnitt der akquirierten Bilder, wobei der Auswertebereich sich insbesondere bis zu einer Entfernung von weniger als 20 Metern zum optischen Sensor, weiterhin insbesondere bis zu einer Entfernung von sechs Metern zum optischen Sensor, erstreckt. Durch diese Einschränkung des auszuwertenden Bildausschnittes wird eine durch das Bildverarbeitungssystem zu verarbeitende Bilddatenmenge reduziert, während die Anomalien rechtzeitig erfasst und identifiziert werden können.

Indem das Bildverarbeitungssystem in dem weiteren Schritt die vorverarbeiteten Bilder in Segmente mit Pixeln gleicher und/oder ähnlicher Farbe und/oder Intensität segmentiert, insbesondere mittels eines Superpixel-Verfahrens, weiterhin insbesondere mittels eines SEED-Superpixel-Verfahrens, ist in einer vorteilhaften Ausgestaltung der Erfindung sichergestellt, dass ein Objekt und dessen Objektkanten zuverlässig erfasst werden kann. Insbesondere das SEED-Superpixel-Verfahren bildet uniforme Segmente mit einer hohen Randgenauigkeit zum Objekt im Bild. Zudem ist das SEED-Superpixel-Verfahren ein schnelles Segmentierverfahren.

Bevorzugt klassifiziert das Bildverarbeitungssystem in dem nächsten Schritt die Segmente in der Weise, dass es zunächst aus jedem Segment jeweils mindestens ein Segmentmerkmal berechnet. Die Segmentmerkmale sind mathematische Zuordnungskriterien für jedes Segment, womit dann im Laufe der Klassifizierung den Segmenten Klassen auf einfache und schnelle Weise zugeordnet werden können.

Weiterhin bevorzugt wird das mindestens eine Segmentmerkmal aus den jeweiligen Intensitäten der Pixel des jeweiligen Segments, und/oder aus den Grauwerten der Pixel des jeweiligen Segments berechnet. Dadurch werden die Informationen jedes Pixels eines Segments mit dem Segmentmerkmal in einem einzigen Wert für das gesamte Segment zusammengefasst. Somit sind folgende Berechnungen vereinfacht und beschleunigt.

In einer vorteilhaften Ausgestaltung umfassen die Segmentmerkmale eine kleinste Intensität des jeweiligen Segments, eine größte Intensität des jeweiligen Segments, eine Differenz aus der größten und der kleinsten Intensität des jeweiligen Segments, ein Histogramm des jeweiligen Segments, einen horizontalen Intensitätsgradienten des jeweiligen Segments, einen vertikalen Intensitätsgradienten des jeweiligen Segments, ein Histogramm des vertikalen und/oder des horizontalen Intensitätsgradienten des jeweiligen Segments, und/oder mindestens einen Intensitätsmittelwert des jeweiligen Segments, insbesondere einen arithmetischen Intensitätsmittelwert und/oder einen Intensitätsmedian des jeweiligen Segments. Dadurch kann das Bildverarbeitungssystem auf einfache und präzise Weise eine Klassifizierung durchführen.

In einer weiteren vorteilhaften Ausgestaltung wird eine Auswahl an Segmentmerkmalen aus einer Grauwertematrix des jeweiligen Segments berechnet, insbesondere eine Homogenität, eine Energie, eine Korrelation und/oder ein Kontrast der Grauwertematrix, wobei die Grauwertematrix eine Häufigkeit einer Paarung der Intensitätsbereiche und/oder der Grauwertbereiche zweier benachbarter Pixel des jeweiligen Segments aufweist. Dadurch kann das Bildverarbeitungssystem auf eine weitere einfache und präzise Weise eine Klassifizierung durchführen.

In einer weiteren vorteilhaften Ausgestaltung umfassen die Segmentmerkmale eine vertikale Position im segmentierten Bild und/oder einen Formschwerpunkt des Segments. Dadurch wird eine weitere Information des Bildes, insbesondere die Positionen der Pixel im Bezug zum Segment und/oder zum gesamten Bild, zur Berechnung der Segmentmerkmale verwendet.

Indem das Bildverarbeitungssystem in dem nächsten Schritt mittels einer Support Vector Machine, wobei die Support Vector Machine ein mathematisches Verfahren zum Klassifizieren von Segmenten ist, jedes Segment mittels des mindestens einen berechneten Segmentmerkmals in eine Klasse klassifiziert und klassifizierte Bilder mit klassifizierten Segmenten erzeugt werden, ist in einer vorteilhaften Ausgestaltung der Erfindung sichergestellt, dass die Segmente, und vorzugsweise die damit erfassten Objekte, schnell und zuverlässig klassifiziert werden können, und die Anomalien, insbesondere automatisch, identifizierbar sind.

Bevorzugt wird vorab eine Klassifikationsgüte der Segmentmerkmale für die jeweiligen Klassen bestimmt und zur Auswahl der geeignetsten Segmentmerkmale für die Support Vector Machine verwendet. Des Weiteren verwendet die Support Vector Machine bevorzugt Segmentmerkmale mit einer hohen Klassifikationsgüte, insbesondere mit der höchsten Klassifikationsgüte, zur Klassifizierung der Segmente. Zudem wird insbesondere die Wahrscheinlichkeiten für eine richtige Klassifizierung für jedes Segmentmerkmal und/oder Segment berechnet. Dadurch wird die Zuverlässigkeit der Klassifizierung erhöht.

Damit fehlerhafte Klassifizierungen vermieden und die Zuverlässigkeit des Bildanalysesystems erhöht wird, ist in einer vorteilhaften Ausgestaltung der Erfindung vorgesehen, dass das Bildverarbeitungssystem in dem nächsten Schritt nach der Klassifizierung der Segmente die Klassifizierungen nachverarbeitet, wobei falsche Klassifizierungen und/oder Klassifizierungen mit berechneten niedrigen Wahrscheinlichkeiten gelöscht werden, wobei zur Identifizierung falscher Klassifizierungen mehrere direkt aufeinanderfolgende klassifizierte Bilder mit klassifizierten Segmenten verglichen werden, und Klassifizierungen von Segmenten, die nur in einem einzelnen klassifizierten Bild vorhanden sind, als falsch gewertet.

In einer vorteilhaften Ausgestaltung der Erfindung ist jeder Klasse mindestens ein Segmentmerkmal zugeordnet. Dadurch kann jede Klasse auf einfache Weise einem Segment zugewiesen werden.

Bevorzugt generiert das Bildverarbeitungssystem in dem folgenden Schritt aus den klassifizierte Bildern mit den klassifizierten Segmenten mittels Warpen, Stitching und/oder eines Übertrags in ein Occupancy Grid einen weiterverarbeitbaren Bilddatensatz. Dadurch können Bilddatensätze von mehreren optischen Sensoren auf einfache Weise zusammengeführt werden. Zudem können Entfernungen der Anomalien zueinander und/oder zur landwirtschaftlichen Arbeitsmaschine übersichtlich dargestellt werden.

Weiterhin bevorzugt wird der weiterverarbeitbare Bilddatensatz mit Datensätzen anderer Sensoren, insbesondere optischer Sensoren, zusammengeführt und zu einem weiteren weiterverarbeitbaren Bilddatensatz weiterverarbeitet. Dadurch können mehrere optische Sensoren genutzt werden, um den Abdeckungsgrad der Umgebung zu erhöhen. Des Weiteren können Klassifizierungen verbessert werden, da durch andere optische Sensorarten, wie zum Beispiel im Falle von Radarsensoren und/oder Laserscanner, neue Segmentmerkmale für das Bildverarbeitungssystem zur Verfügung stehen. Insbesondere können Radarstrahlen insbesondere einen Erntebestand durchdringen und verdeckte Anomalien, insbesondere Hindernisse, erfassen. Die Laserscanner können hingegen insbesondere präzise Entfernungen von Anomalien, insbesondere auch von kleinen Anomalien, erfassen.

Vorzugsweise ist die Datenausgabeeinheit dazu eingerichtet, mindestens einen der weiterverarbeitbaren Bilddatensätze anderen Systemen einer landwirtschaftlichen Arbeitsmaschine, insbesondere einer Regel- und Steuereinheit, zur Verfügung zu stellen. Der mindestens eine weiterverarbeitbare Bilddatensatz ist zudem insbesondere dazu verwendbar, die landwirtschaftliche Arbeitsmaschine und/oder ihre Arbeitsorgane zu steuern. Dadurch können Maßnahmen ergriffen werden, um identifizierten Anomalien, wie zum Beispiel Hindernissen, auszuweichen oder, wie zum Beispiel Fahrspuren, anzusteuern oder die landwirtschaftliche Arbeitsmaschine zu stoppen.

In einer vorteilhaften Ausgestaltung der Erfindung ist der weiterverarbeitbare Bilddatensatz von der landwirtschaftlichen Arbeitsmaschine zur Umfelderkennung, insbesondere zur, vorzugsweisen automatischen, Identifizierung von Anomalien im Vorfeld, verwendbar. Dadurch kann die die Umgebung der landwirtschaftlichen Arbeitsmaschine, insbesondere im Bereich vor der landwirtschaftlichen Arbeitsmaschine, auf einfache Weise überwacht werden und rechtzeitig vor Hindernissen und/oder vor Unregelmäßigkeiten im dem Erntebestand gewarnt, und/oder Maßnahmen zur Steuerung der landwirtschaftlichen Arbeitsmaschine und/oder ihrer Arbeitsorgane eingeleitet werden. Der Fahrzeugführer wird entlastet. Insbesondere kann das Bildverarbeitungssystem zur autonomen oder teilautonomen Steuerung der landwirtschaftlichen Arbeitsmaschine verwendet werden.

In einer weiteren vorteilhaften Ausgestaltung der Erfindung umfassen die Anomalien Hindernisse und/oder Unregelmäßigkeiten im dem Erntebestand und sind Klassen zugeordnet, wobei Unregelmäßigkeiten Lagergetreide, Bestandslücken, Fahrspuren, Beiwuchs und/oder Bestandskanten umfassen, und Hindernisse niedrige und/oder hohe Hindernisse umfassen, wobei niedrige Hindernisse durch Hebung eines Anbaugerätes ohne Beschädigung der landwirtschaftlichen Arbeitsmaschine passiert werden können und hohe Hindernisse ein Ausweichen der landwirtschaftlichen Arbeitsmaschine erfordern. Dadurch werden insbesondere Gefahren für die landwirtschaftliche Arbeitsmaschine und einen Ernteprozess, vorzugsweise automatisch, erkannt. Der Fahrzeugführer wird entlastet. Zudem hat es den Effekt, dass die Anomalien auf Basis Ihrer Bedeutung für den Fahrzeugführer in einer Klasse gruppiert werden können und einheitlich als Klasse dargestellt werden können. Insbesondere indem verschiedene Klassen in einer visuellen Darstellung mit gleichen Farben zusammengefasst werden, wird der Fahrzeugführer entlastet. Er muss nicht mehr entscheiden, ob es sich zum Beispiel um ein Hindernis handelt, sondern es wird vorzugsweise sofort als solches kenntlich gemacht.

Die vorliegende Erfindung wird nachstehend anhand von in den Zeichnungen dargestellten Ausführungsbeispielen näher erläutert. Es zeigen:
- Fig. 1: eine schematische Darstellung des Bildverarbeitungssystems sowie eine landwirtschaftliche Arbeitsmaschine mit dem Bildverarbeitungssystem;
- Fig. 2: eine schematische Darstellung der Bildakquirierung und einen ersten Schritt des Bildverarbeitungssystems;
- Fig. 3: eine schematische Darstellung eines weiteren Schrittes des Bildverarbeitungssystems;
- Fig. 4: eine schematische Darstellung eines nächsten Schrittes des Bildverarbeitungssystems;
- Fig. 5: eine schematische Darstellung eines folgenden Schrittes des Bildverarbeitungssystems;
- Fig. 6: eine schematische Einteilung von Klassen;
- Fig. 7: eine schematische Darstellung von Anwendungen des Bildverarbeitungssystems zur Identifikation von Anomalien und zwar in (a) Lagergetreide; in (b) Bestandslücken; in (c) einer Fahrspur; in (d) Beiwuchs; in (e) ein niedriges Hindernis und in (f) hohes Hindernis.

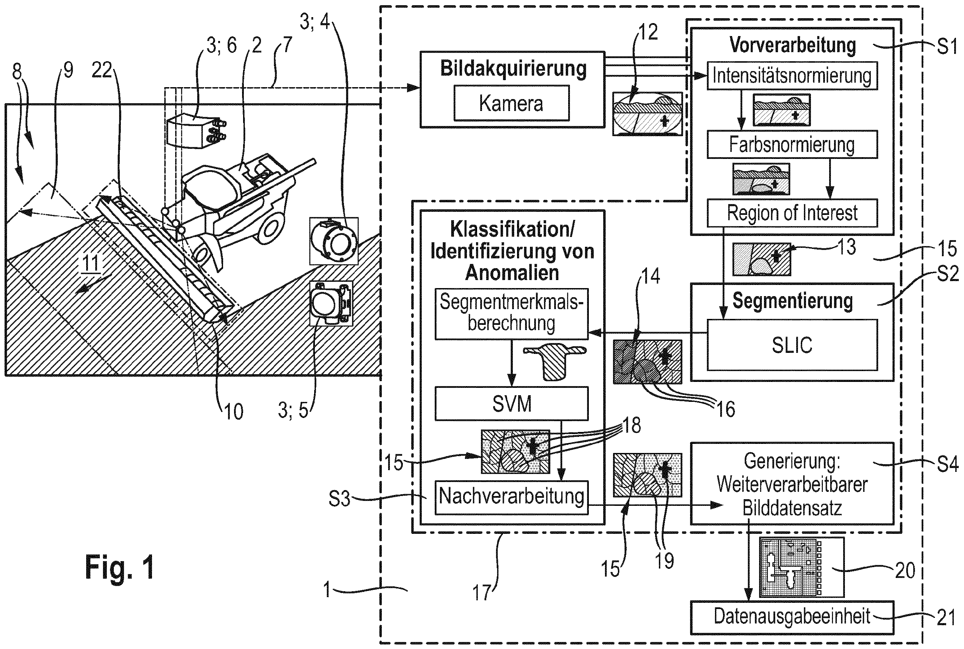

Fig.1 zeigt eine schematische Darstellung des erfindungsgemäßen Bildverarbeitungssystems 1 mit seinen einzelnen Schritten S1-S4 sowie eine an sich bekannte und nicht näher beschriebene landwirtschaftliche Arbeitsmaschine 2 mit dem Bildverarbeitungssystem 1. Die landwirtschaftliche Arbeitsmaschine 2 umfasst vorzugsweise Mähdrescher, Feldhäcksler und/oder Traktoren. An die landwirtschaftliche Arbeitsmaschine 2 können ein oder mehrere Anbaugeräte 22 angeordnet sein. Die landwirtschaftliche Arbeitsmaschine 2 ist hier als Mähdrescher mit einem Schneidwerk als Anbaugerät 22 ausgebildet. An der landwirtschaftlichen Arbeitsmaschine 2 sind optische Sensoren 3, insbesondere mindestens eine Kamera 4, die als Farb- und/oder Monochrom-Kamera ausgebildet ist, angeordnet. Des Weiteren sind vorzugsweise mindestens ein Radarsensor 5 und/oder vorzugsweise mindestens ein Laserscanner 6 an der landwirtschaftlichen Arbeitsmaschine 2 angeordnet. Es liegt im Rahmen der Erfindung andere optische Sensoren 3, wie zum Beispiel mindestens eine Infrarot-Kamera, oder eine beliebige Anzahl an optischen Sensoren 3 einzusetzen. Die optischen Sensoren 3, insbesondere die mindestens eine Kamera 4, besonders bevorzugt die Farbkameras und/oder die Monochromkameras, generieren Bilder 7 von einer Umgebung 8 der landwirtschaftlichen Arbeitsmaschine 2. Die Umgebung 8 umfasst hier insbesondere ein Vorfeld 9 und/oder einen Bereich des Anbaugerätes 10. Das Vorfeld 9 erstreckt sich in Fahrtrichtung 11 vor der landwirtschaftlichen Arbeitsmaschine 2 vorzugsweise mindestens über eine Breite entsprechend einer Breite des Anbaugerätes 22. Das Generieren von Bildern 7 von weiteren Bereiche der Umgebung 8 liegt im Rahmen der Erfindung. So können zum Beispiel auch Bilder 7 von Bereichen hinter dem Anbaugerät 22 und/oder von Bereichen neben und/oder hinter der landwirtschaftlichen Arbeitsmaschine 2 generiert werden. Ebenso ist es vorstellbar, dass Bilder 7 von Anbaugeräten 22, Arbeitsorganen oder von Bereichen innerhalb der landwirtschaftlichen Arbeitsmaschine 2 generiert werden.

Im Folgenden werden die erfindungsgemäßen Schritte des Verfahrens zum Betreiben des Bildverarbeitungssystems 1 in noch näher zu beschreibender Weise erläutert. Das Bildverarbeitungssystem 1 weist eine Bildanalyseeinheit 17 zur Durchführung dieses Verfahrens zur Bildverarbeitung auf, umfassend mehrere Schritte S1,S2,S3,S4. Die Bildanalyseeinheit 17 ist vorzugsweise als eine Recheneinheit ausgebildet. Eine Anzahl von Bilder 7 der optischen Sensoren 3, insbesondere von der mindestens einen Kamera 4, insbesondere der Farbkamera, werden von dem Bildverarbeitungssystems 1 akquiriert. In einem ersten Schritt S1 werden die akquirierten Bildern 12 vorverarbeitet. Dabei werden die akquirierten Bilder 12, insbesondere deren Bildeigenschaften, normiert und vorzugsweise ein Ausschnitt jedes akquirierten Bildes 12 ausgewählt. In einem weiteren Schritt S2 werden die vorverarbeiteten Bilder 13 in Segmente 16 segmentiert. In einem nächsten Schritt S3 werden die Segmente 16 der segmentierten Bilder 14 klassifiziert, indem ihnen zuvor erstellte Klassen 18 zugeordnet werden. Dadurch werden klassifizierte Bilder 15 mit identifizierbaren Anomalien 19 geschaffen. Vorzugsweise identifiziert die Bildanalyseeinheit 17 die Anomalien 19 in den klassifizierten Bildern 15 automatisch. Insbesondere werden im Schritt S3 die Anomalien 19 gleichzeitig bei der Klassifizierung identifiziert. Alternativ erfolgt die Identifizierung der Anomalien 19 an einer anderen Stelle, zum Beispiel durch eine Regel-und Steuereinheit der landwirtschaftlichen Arbeitsmaschine 2. In einem folgenden Schritt S4 generiert das Bildverarbeitungssystem 1 einen weiterverarbeitbaren Bilddatensatz 20. Die Bildanalyseeinheit 17 überträgt den weiterverarbeitbaren Bilddatensatz 20 an eine Datenausgabeeinheit 21. Die Datenausgabeeinheit 21 stellt den weiterverarbeitbaren Bilddatensatz 20 visuell dar und/oder überträgt ihn an andere Systeme der landwirtschaftlichen Arbeitsmaschine 2.

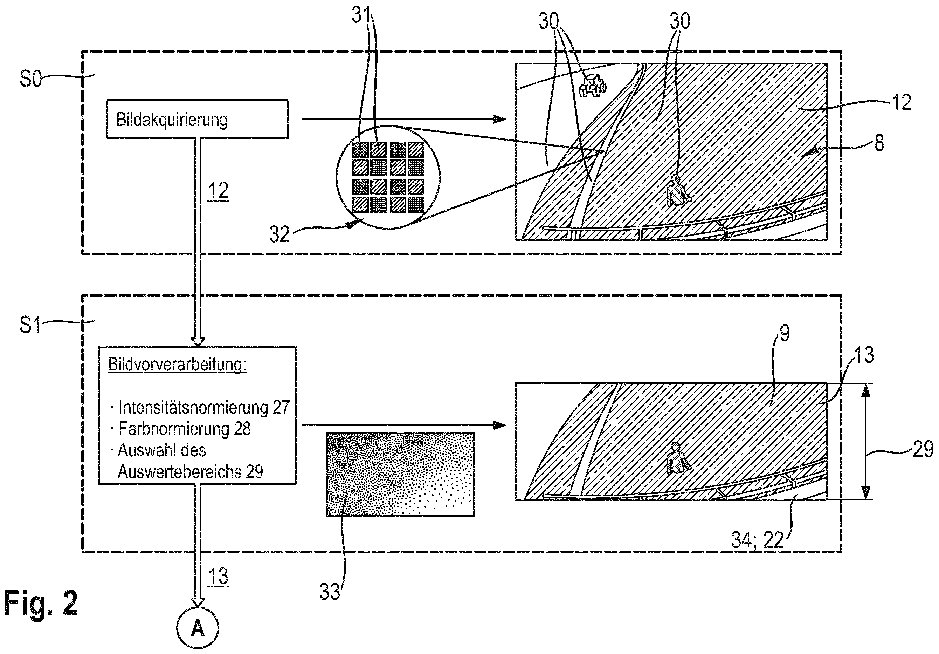

Fig. 2 bis Fig. 5 zeigen die einzelnen Schritte S1-S4 des Bildverarbeitungssystems 1 mit Bildern 7 und/oder schematischen Detaildarstellungen zu den einzelnen Schritte S1-S4.

Die Bilder 7 sind vorzugsweise digitale Bilder 7. Die Anzahl von Bildern 7 ist vorzugsweise ein Teil einer Bildreihe oder eines Videos, insbesondere frames. Die Bilder 7 werden mittels eines Bildsensors, zum Beispiel mittels eines Bayer-Sensors mit einem Bayer-Pixelmuster, erzeugt (siehe Figur 2). Die Bilder 7, und insbesondere der Bildsensor, sind aus Pixeln 31 aufgebaut. Jedes Pixel 31 weist eine Intensität 35 auf. Die Intensitäten 35 jedes Pixels 31 werden erfasst. Die Intensitäten 35 sind vorzugsweise ein Maß für die Lichtenergie pro Fläche des Bildsensors und pro Zeiteinheit. Des Weiteren ist insbesondere jedes Pixel 31 ein Monochrompixel oder ein Farbpixel. In Abhängigkeit eines Bildsensortyps sind bei Farbpixeln Farbfilter auf der Oberfläche jedes Pixels 31 des Bildsensors aufgebracht. Bevorzugt weisen die Bildsensoren von Farbkameras, insbesondere der Bayersensor, verschiedene Arten von Farbpixeln auf, wobei jede Art einen anderen Farbfilter aufweist. Gleiche Farbpixel des Bildes 7 sind bevorzugt jeweils einem Farbkanal des Bildes 7 zugeordnet. Dabei ist eine Anzahl und eine Aufteilung der Farbkanäle im Wesentlichen vom Bildsensortyp abhängig. Zum Beispiel teilen sich die Farbpixel und die Farbkanäle beim Bayer-Bildsensor in rote, grüne und blaue Farbpixel und Farbkanäle auf. Aus den Intensitäten unterschiedlicher Farbpixel sind Farben ausbildbar, wobei jede Farbe zu einem Grauwert umwandelbar ist. Zur Berechnung des Grauwertes werden die Intensitäten 35 der einzelnen Farbkanäle vorzugsweise derart korrigiert werden, dass sie dem menschlichen Sehen nachempfunden sind. Anschließend werden vorzugsweise die derart korrigierten Intensitäten 35 benachbarten Farbpixel zu einem Grauwert aufsummiert.
Die Monochrompixel des Bildes 7 sind bevorzugt einem Graukanal des Bildes 7 zugeordnet. Monochrompixel weisen vorzugsweise keinen Farbfilter auf. Auf ihnen kann zwar auch ein Filter aufgebracht sein; dieser Filter ist dann jedoch im Wesentlichen einheitlich für alle Monochrompixel und filtert lediglich Licht aus einem nicht sichtbaren Lichtspektrum heraus. Bevorzugt weisen Bildsensoren von Monochromkameras Monochrompixel auf. Zudem weist auch eine Auswahl an Bildsensoren von Farbkameras Bildsensoren mit Monochrompixeln und Farbpixeln auf.
Es liegt im Rahmen der Erfindung andere Bildsensortypen für Farbkameras zu verwenden, die sich im Aufbau vom Bayer-Sensor unterscheiden. So ist es denkbar, Bildsensoren mit einem anderen Pixelmuster, zum Beispiel einem XTrans-Bildsensor, oder einen Bildsensor mit einem anderen Aufbauprinzip, zum Beispiel einen Foveon-Bildsensor, zu verwenden. Im Falle des Foveon-Bildsensors umfasst jeder Pixel 31 mehrere Farbkanäle. Die Pixel 31 sind dabei im Wesentlichen einheitlich und weisen keinen Farbfilter auf.

Fig. 2 ein akquiriertes Bild 12 aus einer Anzahl von Bildern 7 der Umgebung 8 der landwirtschaftlichen Arbeitsmaschine 2, das akquiriert wurde. Die akquirierten Bilder 12 umfassen unbekannte Objekte 30, die vorzugsweise voneinander visuell, insbesondere mittels Rändern, abgrenzbare Teile der akquirierten Bilder 12 sind.

Die akquirierten Bilder 12 werden in einem ersten Schritt S1 des Bildverarbeitungssystem 1 vorverarbeitet. Dabei wird mindestens eine Normierung der akquirierten Bilder 12 durchgeführt. Insbesondere wird eine Intensitätsnormierung 27 und/oder eine Farbnormierung 28 durchgeführt. Zudem wird vorzugsweise eine Auswahl eines Auswertebereichs 29 in den akquirierten Bildern 12 durchgeführt.

Die Intensitätsnormierung 27 kann mit mindestens einem Farb- oder Graukanal durchgeführt werden. Bei der Intensitätsnormierung 27 wird hier vorzugsweise mindestens ein Referenzbild 33 erstellt, das zum Beispiel objektivbedingte oder umgebungslichtbedingte Intensitätsverläufe darstellt. Bevorzugt werden dafür mehrere Referenzbilder 33 erzeugt und zu einem Referenzbild 33 übereinandergelegt. Vorzugsweise wird die maximale Intensität 35 eines Pixels 31 des Referenzbildes 33 zusammen mit Intensitätsverläufen im Referenzbild 33 zur Berechnung eines pixelspezifischen Intensitätskorrekturfaktors für jedes Pixel 31 verwendet. Anschließend wird jeder Pixel 31 der akquirierten Bilder 12 mit dem pixelspezifischen Intensitätskorrekturfaktor, bevorzugt multiplikativ, korrigiert.

Bei der vorzugsweise anschließenden Farbnormierung 28 wird bevorzugt ein Referenzobjekt 34 mit bekannter Farbe in den akquirierten Bildern 12, insbesondere in einer Anzahl an akquirierten Bildern 12, ausgewählt. Vorzugsweise ist das Referenzobjekt 34 ein lackiertes Bauteil und/oder ein lackiertes Anbaugerät 22 der landwirtschaftlichen Arbeitsmaschine 2, dessen genaue Farbe bekannt ist. Im vorliegenden Beispiel ist das Referenzobjekt 34 eine Haspel. Es wird jeweils ein Intensitätskorrekturwert für jeden Farbkanal des akquirierten Bildes 12 ermittelt und die Intensitäten 35 der Pixel 31 jedes Farbkanals werden einheitlich um den jeweiligen Intensitätskorrekturwert korrigiert. Die Korrektur erfolgt bevorzugt durch Subtraktion oder Addition des Intensitätskorrekturwerts. Jeder Intensitätskorrekturwert wird bevorzugt mittels Bestimmung einer Differenz der gemessenen jeweiligen Intensitäten 35 der dem jeweiligen Farbkanal zugeordneten Farbpixel eines Referenzobjekts 34 mit bekannter Farbe im akquirierten Bild 12 zu den bekannten jeweiligen Intensitäten 35 der dem jeweiligen Farbkanal zugeordneten Farbpixel eines Referenzobjekts 34 mit bekannter Farbe im akquirierten Bild 12 ermittelt. Die gemessenen jeweiligen Intensitäten 35 werden dabei insbesondere aus einer Auswahl von Farbpixel des Referenzobjekts 34 mit bekannter Farbe und durch Bildung eines Mittelwerts aus ihnen ermittelt. Der Mittelwert ist dabei vorzugsweise ein Median.

Weitere Normierungen, wie zum Beispiel eine Korrektur von Objektivverzerrungen oder eine Signalanpassung verschiedener Bildsensortypen, liegen im Rahmen der Erfindung.

Bei der Vorverarbeitung des ersten Schrittes S1 wird zudem bevorzugt auch ein Auswertebereichs 29 der akquirierten Bilder 12 ausgewählt. Der ausgewählte Auswertebereich 29 umfasst jeweils einen Ausschnitt der akquirierten Bilder 12, vorzugsweise das Vorfeld 9. Bevorzugt erstreckt sich eine Länge des Auswertebereichs 29 in Fahrtrichtung 11 bis zu einer Entfernung von weniger als 20 Metern vom optischen Sensor 3. Besonders bevorzugt erstreckt sich die Länge des Auswertebereichs 29 in Fahrtrichtung 11 bis zu einer Entfernung von sechs Metern vom optischen Sensor 3. Der Auswertebereich 29 erstreckt sich zudem bevorzugt mindestens über eine Breite eines Anbaugerätes 22 der landwirtschaftlichen Arbeitsmaschine 2. Die mögliche Länge und die Breite des Auswertebereichs 29 sind im Wesentlichen von der Rechenleistung der Bildanalyseeinheit 17 und einer Fahrzeuggeschwindigkeit der landwirtschaftlichen Arbeitsmaschine 2 abhängig. Eine ausreichende Leistungsfähigkeit der Bildanalyseeinheit 17 vorausgesetzt, ist eine Auswahl des Auswertebereichs 29 optional.

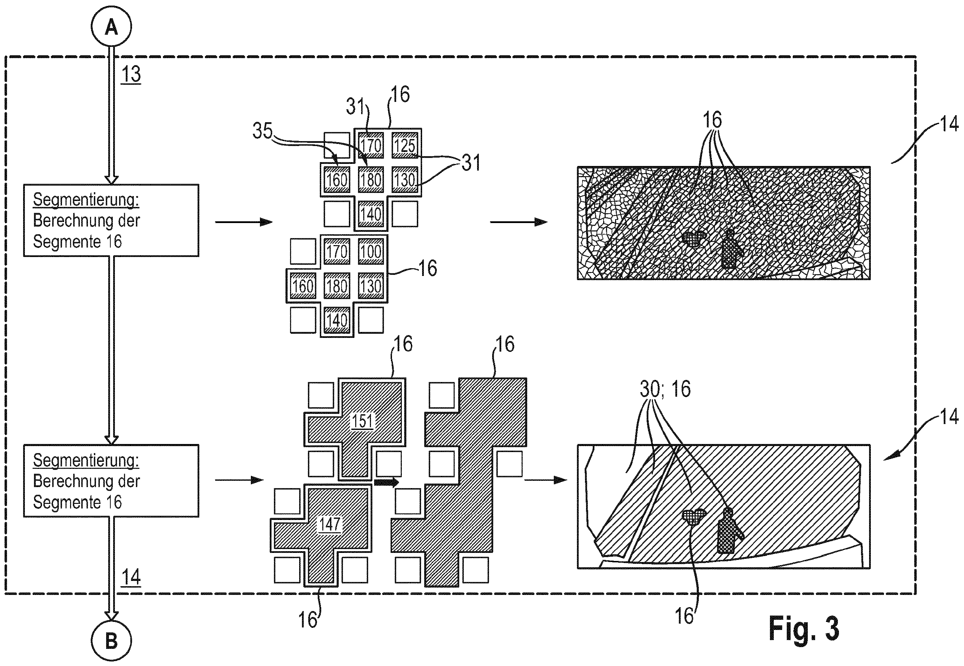

Fig. 3 zeigt eine schematische Darstellung eines weiteren Schrittes S2 des Bildverarbeitungssystems 1. In dem weiteren Schritt S2 werden die vorverarbeiteten Bilder 13 in Segmente 16 mit Pixeln 31 gleicher und/oder ähnlicher Farbe und/oder Intensität 35 segmentiert. Dafür wird ein mathematisches Segmentierverfahren verwendet, insbesondere ein Superpixel-Verfahren, weiterhin insbesondere ein SEED-Superpixel-Verfahren. Nach Anwendung des Segmentierverfahrens entstehen segmentierte Bilder 14. Ränder der Objekte 30 werden dann vorzugsweise von Teilen der Ränder der Segmente 16 abgebildet. In den Segmenten 16 sind bevorzugt benachbarte Pixel 31 gleicher und/oder ähnlicher Farbe und/oder Intensität 35 zusammengefasst. Die Segmente 16 entsprechen vorzugsweise Superpixeln. Das SEED-Superpixel-Verfahren ist ein Superpixelverfahren. Die Superpixelverfahren gehören zur Gruppe der Region-basierten Verfahren der Segmentierverfahren. Beim Superpixelverfahren wachsen Superpixel ausgehend von jeweils einem initialen Saatpunkt, indem Pixel 31 gleicher und/oder ähnlicher Farbe und/oder Intensität 35 zu einem Superpixel zusammengeführt werden. Stoßen Ränder von Superpixeln aneinander, wird jeweils ein neuer Saatpunkt für diese Superpixel gewählt, der einem neuen Formschwerpunkt des jeweiligen Superpixels entspricht und diese Superpixel wachsen von neuem ausgehend von dem jeweiligen neuen Saatpunkt an. Es entstehen homogene Superpixel, die die Ränder der Objekte 30 zuverlässig nachbilden. Beim SEED-Superpixel-Verfahren wird hingegen das vollständige, erneute Anwachsen der Superpixel vermieden und lediglich die Ränder der Superpixel werden verschoben. Dadurch ist das Verfahren bei gleichzeitig hoher Präzision schneller als die bisherigen Superpixelverfahren oder Segmentierverfahren. Es liegt jedoch im Rahmen der Erfindung, andere Superpixel-Verfahren anzuwenden, wie zum Beispiel ein SLIC-Superpixel-Verfahren. Alternativ zu dem Superpixel-Segmentierverfahren lassen sich auch andere Region-based-Verfahren, wie zum Beispiel ein Region-Growing-Verfahren, zum Segmentieren verwenden. Weiterhin lassen sich alternativ zu einem Region-based-Verfahren auch Schwellwert-Segmentierverfahren, kantenbasierte Segmentierverfahren oder hybride Segmentierverfahren anwenden. Es ist zudem denkbar, Segmente 16 auf Basis anderer Merkmale als der Intensität 35 und/oder der Farbe zu bilden.

In dem weiteren Schritt werden zudem optional die Segmente 16 zu größeren Segmenten 16 zusammengefasst und die Redundanz der Segmente 16 in den segmentierten Bildern 14 dadurch reduziert. Dazu werden bevorzugt die Intensitäten 35, die Farbe und/oder die Grauwerte der Pixel 31 jedes Segments 16 der segmentierten Bilder 14 jeweils zusammengefasst, sodass jedes Segment 16 einheitliche Intensitäten 35, eine einheitlichen Farbe und/oder einen einheitlichen Grauwert aufweist. Angrenzende Segmente 16 mit gleichen oder ähnlichen Intensitäten 35, Farben und/oder Grauwerten werden dann zu größeren Segmenten 16 zusammengefasst. Dadurch wird vorzugsweise jedes Objekt 30 in den segmentierten Bildern 14 von jeweils einem Segment 16 umschlossen. Ränder der Segmente 16 entsprechen dann vorzugsweise den Rändern der Objekte 30. Es liegt auch im Rahmen der Erfindung die Segmenten 16 nicht zusammenzuführen, da die Segmentierung mittels des Segmentierverfahrens für eine Durchführung des nächsten Schrittes bereits ausreichend ist.

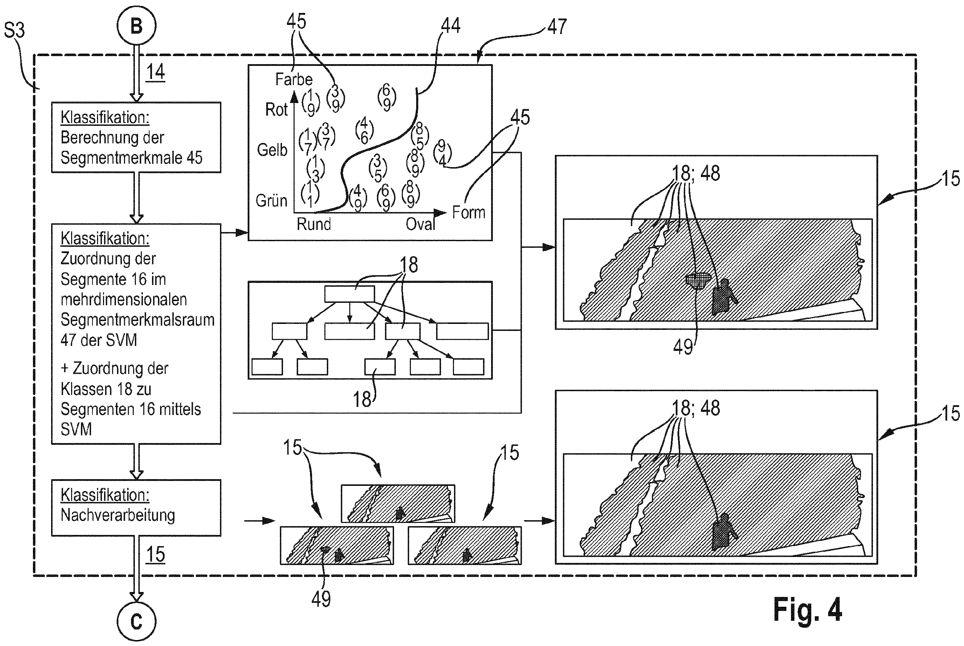

Fig. 4 zeigt eine schematische Darstellung eines nächsten Schrittes S3 des Bildverarbeitungssystems 1. In dem nächsten Schritt S3 werden die Segmente 16 klassifiziert. Dazu wird aus jedem Segment 16 jeweils mindestens ein Segmentmerkmal 45 berechnet. Die Segmentmerkmale 45 werden dazu aus den jeweiligen Intensitäten 35 der Pixel 31 des jeweiligen Segments 16, und/oder aus den Grauwerten der Pixel 31 des jeweiligen Segments 16 berechnet.

Die Segmentmerkmale 45 umfassen bevorzugt eine kleinste Intensität 35 des jeweiligen Segments 16, eine größte Intensität 35 des jeweiligen Segments 16, eine Differenz aus der größten und der kleinsten Intensität 35 des jeweiligen Segments 16, ein Histogramm des jeweiligen Segments 16, einen horizontalen Intensitätsgradienten des jeweiligen Segments 16, einen vertikalen Intensitätsgradienten des jeweiligen Segments 16, ein Histogramm des vertikalen und/oder des horizontalen Intensitätsgradienten des jeweiligen Segments 16, und/oder mindestens einen Intensitätsmittelwert des jeweiligen Segments 16, insbesondere ein arithmetischen Intensitätsmittelwert und/oder ein Intensitätsmedian des jeweiligen Segments 16. Andere Mittelwerte als Segmentmerkmal 45 sind ebenfalls denkbar, wie zum Beispiel ein geometrischer, harmonischer, quadratischer und/oder kubischer Mittelwert, und /oder gewichtete Mittelwerte.

Des Weiteren umfassen die Segmentmerkmale 45 vorzugsweise eine Auswahl an Segmentmerkmalen 45, die aus einer Grauwertematrix des jeweiligen Segments 16 berechnet werden, wobei die Grauwertematrix eine Häufigkeit einer Paarung der Intensitätsbereiche und/oder der Grauwertbereiche zweier benachbarter Pixel 31 des jeweiligen Segments 16 aufweist. Jeder Intensitätsbereich und/oder Grauwertebereich gibt jeweils einen Bereich zwischen zwei Intensitäten 35 und/oder Grauwerten wieder. Jeder Intensitätsbereich und/oder Grauwertebereich ist zudem gleich groß und deckt zusammen mit den anderen Intensitätsbereichen und/oder Grauwertebereichen einen Wertebereich zwischen der kleinsten und der größten Intensität 35 und/oder de Grauwert in einem Segment 16 ab. Insbesondere umfassen die Segmentmerkmale 45 eine Homogenität, eine Energie, eine Korrelation und/oder ein Kontrast der Grauwertematrix. Dabei ist die Homogenität ein Maß ein Maß für eine Ähnlichkeit der Intensitätsbereiche und/oder die Grauwertbereiche der benachbarten Pixeln 31. Die Energie ist ein Maß für eine zahlenmäßige Konzentrierung bestimmter Paarungen zweier Intensitätsbereiche und/oder Grauwertbereiche in einem Segment 16. Die Korrelation ist ein Maß für eine Häufigkeit eines statistischen Zusammenhangs bestimmter Paarungen von Intensitätsbereichen und/oder Grauwertbereichen mittels Bestimmung von Varianzen. Dabei zeigt eine kleine Varianz einen statistischen Zusammenhang auf. Der Kontrast ist ein Maß für eine Häufigkeit stark verschiedener Paarungen von den Intensitätsbereichen und/oder den Grauwertbereichen in einem Segment 16.

Des Weiteren umfassen die Segmentmerkmale 45 vorzugsweise eine vertikale Position im segmentierten Bild 14 und/oder einen Formschwerpunkt des Segments 16. Die vertikale Position im segmentierten Bild 14 bezieht sich hier auf Pixelkoordinaten des Segments 16 im zweidimensionalen segmentierten Bild 14. Der Formschwerpunkt des Segments 16 ist angelehnt an einen physikalischen Massenmittelpunkt. Weitere Segmentmerkmale 45 sind denkbar.

In dem nächsten Schritt S3 wird mittels einer Support Vector Machine, wobei die Support Vector Machine ein mathematisches Verfahren zum Klassifizieren von Segmenten 16 ist, jedes Segment 16 mittels des mindestens einen berechneten Segmentmerkmals 45 in eine Klasse 18 klassifiziert. Es werden dabei klassifizierte Bilder 15 mit klassifizierten Segmenten 48 erzeugt. Die Support Vector Machine ist ein lernfähiges mathematisches Verfahren, insbesondere ein mathematisches Modell, zur automatischen Klassifizierung von Segmenten 16 und Bildung von Klassengrenzen 44. Die dabei gebildeten Klassengrenzen 44 haben einen möglichst weiten Abstand zu allen anderen Segmenten 16. Vorzugsweise wird eine Support Vector Machine mit einer einer-gegen-alle-Kodierung verwendet. Bei der einer-gegen-alle-Kodierung werden einem Segment 16 mehrere mögliche Klassen 18 mit unterschiedlichen Wahrscheinlichkeiten für eine richtige Zuordnung zugeordnet. Ausgegeben wird jedoch die wahrscheinlichste Klasse 18. Somit lassen sich bei einer eventuellen späteren Zusammenführung mit anderen weiterverarbeitbaren Bilddatensätzen 20, insbesondere anderer optischer Sensoren 3, die Wahrscheinlichkeit der Klassenzuordnungen mehrerer weiterverarbeitbaren Bilddatensätzen 20 miteinander verrechnen. Es liegt jedoch im Rahmen der Erfindung, andere Algorithmen für die Support Vector Machine, wie zum Beispiel einen Gaußkernel-Funktion, zu verwenden.

Die Support Vector Machine ordnet jedem Segment 16 basierend auf dem mindestens einen berechneten Segmentmerkmal 45, vorzugsweise eindeutig, eine Klasse 18 zu. Dazu ordnet sie die Segmente 16 in Teilbereiche eines mehrdimensionalen Segmentmerkmalsraums 47 ein. Dabei können unterschiedliche Segmentmerkmale 45 kombiniert werden. Aus den segmentierten Bildern 14 werden somit klassifizierte Bilder 15 mit klassifizierten Segmenten 48 gebildet.

Bevorzugt wird die Support Vector Machine vor Ihrem Einsatz trainiert. Beim Trainieren der Support Vector Machine werden den Segmenten 16 von segmentierten Bildern 14 zuvor, vorzugsweise einmalig ab Werk, manuell Klassen 18 zugewiesen. Optional ist auch ein nachträgliches Trainieren der Support Vector Machine möglich, vorzugsweise auch während eines Erntebetriebes. Bevorzugt werden den Objekten 30 dabei auf einfache haptischvisuelle Weise, zum Beispiel mittels eines Touchscreens, Klassen 18 zugewiesen.

Des Weiteren wird vorzugsweise vorab eine Klassifikationsgüte der Segmentmerkmale 45 für die jeweiligen Klassen 18 bestimmt und zur Auswahl der geeignetsten Segmentmerkmale 45 für die Support Vector Machine verwendet. Die Klassifikationsgüte ist ein Maß für die Eignung eines Segmentmerkmals 45 für eine eindeutige Klassenzuordnung. Ist die Klassifikationsgüte eines Segmentmerkmals 45 für eine bestimmte Klasse 18 zu niedrig, wird dieses Segmentmerkmal 45 bevorzugt nicht zur Zuordnung dieser Klasse 18 verwendet. Dadurch wird zudem der erforderliche Rechenaufwand reduziert. Die Klassifikationsgüte wird vorzugsweise mittels statistischer und/oder empirischer Tests, insbesondere mittels einer Kreuzvalidierung, einer Konfusionsmatrix und/oder einer Receiver-Operating-Characteristic-Kurve, geprüft. Weitere Tests zur Bestimmung der Klassifikationsgüte sind denkbar. Vorzugsweise verwendet die Support Vector Machine Segmentmerkmale 45 mit einer hohen Klassifikationsgüte, insbesondere mit der höchsten Klassifikationsgüte, zur Klassifizierung der Segmente 16. Dadurch werden die Segmente 16 vorzugsweise eindeutig und zuverlässig klassifiziert.
Des Weiteren werden vorzugsweise die Wahrscheinlichkeiten, insbesondere A-Posteriori-Wahrscheinlichkeiten, für eine richtige Klassifizierung für jedes Segmentmerkmal 45 und/oder Segment 16 berechnet und vorzugsweise für jede Klassifizierung angegeben.

In dem nächsten Schritt S3 werden vorzugsweise nach der Klassifizierung der Segmente 16 die Klassifizierungen nachverarbeitet. Dabei werden falsche Klassifizierungen 49 und/oder Klassifizierungen mit berechneten niedrigen Wahrscheinlichkeiten gelöscht. Zur Identifizierung falscher Klassifizierungen 49 werden vorzugsweise mehrere direkt aufeinanderfolgende klassifizierte Bilder 15 mit klassifizierten Segmenten 48 verglichen, und Klassifizierungen von Segmenten 16, die nur in einem einzelnen klassifizierten Bild 15 vorhanden sind, als falsch gewertet.

Bevorzugt ist jeder Klasse 18 mindestens ein Segmentmerkmal 45 zugeordnet. Vorzugsweise sind den Klassen Kombinationen von Segmentmerkmalen 45 zugeordnet. So dient jeweils ein einziges Segmentmerkmal 45 und/oder eine Kombination an Segmentmerkmalen 45 zur, vorzugsweisen eindeutigen, Zuordnung der jeweiligen Klasse 18 zu jedem Segment 16. Mittels der Support Vector Machine sind für jede Klasse 18 des Weiteren Werte, Grenzwerte und/oder Wertebereiche für jedes Segmentmerkmal 45 zur Zuordnung festgelegt.

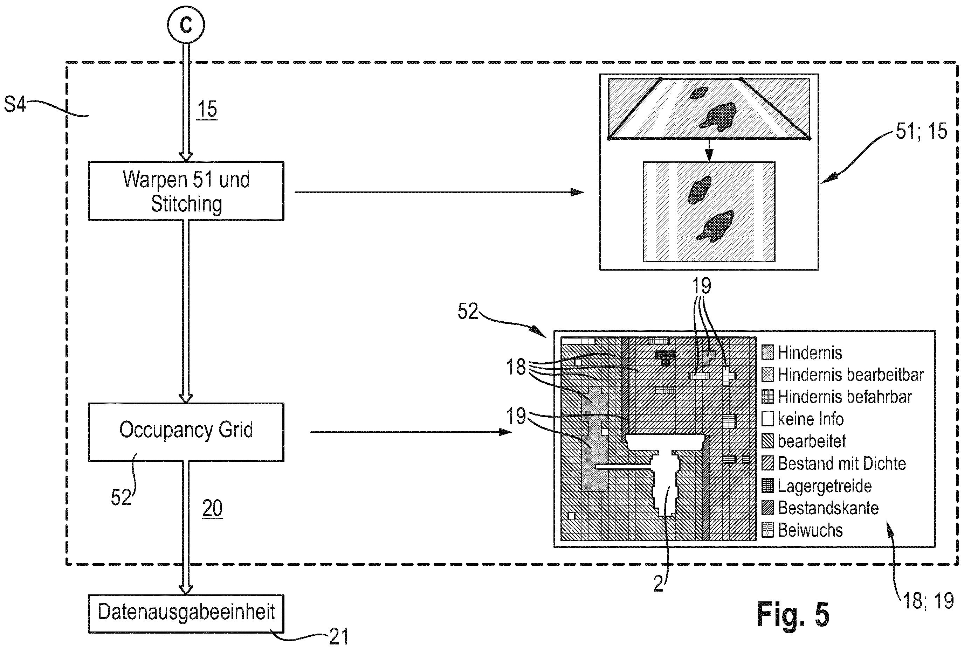

Fig. 5 zeigt eine schematische Darstellung des folgenden Schrittes S4 des Bildverarbeitungssystems 1. Im folgenden Schritt S4 generiert das Bildverarbeitungssystem 1, vorzugsweise aus den klassifizierte Bildern 15 mit den klassifizierten Segmenten 48 mittels Warpen 51, Stitching und/oder eines Übertrags in ein Occupancy Grid 52, einen weiterverarbeitbaren Bilddatensatz 20. Beim Warpen 51 wird eine Perspektive transformiert.

Dabei wird insbesondere eine Perspektive entsprechend einer Kameraausrichtung in eine Vogelperspektive geändert. Beim Stitching werden Bilder 7,15, insbesondere mehrerer optischer Sensoren 3, insbesondere Kameras 4, die räumlich und/oder zeitlich miteinander verknüpft sind, zu einem Bild 7,15 fusioniert (nicht dargestellt). Dadurch entsteht ein größeres Bild 7,15 mit einer größeren Abdeckung der Umgebung 8. Es liegt im Rahmen der Erfindung, das Stitching an anderer Stelle des Verfahrens durchzuführen. Der Übertrag in das Occupancy Grid 52 bewirkt eine räumliche Zuordnung von klassifizierten Segmenten 48 und/oder identifizierten Anomalien 19. Diese Darstellung stellt die räumlichen Entfernungen der einzelnen klassifizierten Segmente 48 und/oder identifizierten Anomalien 19 zueinander und zur landwirtschaftlichen Arbeitsmaschine 2 dar.

Bevorzugt wird der weiterverarbeitbare Bilddatensatz 20 mit Datensätzen anderer Sensoren, insbesondere optischer Sensoren 3, zusammengeführt und zu einem weiteren weiterverarbeitbaren Bilddatensatz 20 weiterverarbeitet. Anstelle des weiterverarbeitbaren Bilddatensatz 20 wird dann im Folgenden bevorzugt der weitere weiterverarbeitbare Bilddatensatz 20 verwendet. So kann der weitere weiterverarbeitbare Bilddatensatz 20 ebenfalls visuell dargestellt und/oder an andere Systeme der landwirtschaftlichen Arbeitsmaschine 2 übertragen werden. Andere optische Sensoren 3 sind insbesondere der Radarsensor 5 und/oder der Laserscanner 6.

Vorzugsweise ist die Datenausgabeeinheit 21 dazu eingerichtet, mindestens einen der weiterverarbeitbaren Bilddatensätze 20 anderen Systemen einer landwirtschaftlichen Arbeitsmaschine 2, insbesondere einer Regel- und Steuereinheit, zur Verfügung zu stellen. Vorzugsweise ist die Datenausgabeeinheit 21 als eine Schnittstelle ausgebildet. Weiterhin bevorzugt ist die Datenausgabeeinheit über einen CAN-Bus, ISObus, oder anderen Datenübertragungssystemen, wie zum Beispiel Bluetooth oder WLAN, mit einem oder mehreren Systemen der landwirtschaftlichen Arbeitsmaschine 2 verbunden. Vorzugsweise ist die Datenausgabeeinheit 21 mit der Regel- und Steuereinheit 23 und/oder mit der Anzeigeeinheit verbunden. Des Weiteren ist der mindestens eine weiterverarbeitbare Bilddatensatz 20 bevorzugt dazu verwendbar, die landwirtschaftliche Arbeitsmaschine 2 und/oder ihre Arbeitsorgane zu steuern. Dadurch können die erfassten Objekte 30, insbesondere die identifizierten Anomalien 19, zur Steuerung der landwirtschaftlichen Arbeitsmaschine 2 und/oder ihrer Arbeitsorgane verwendet werden. So ist die landwirtschaftliche Arbeitsmaschine 2 bevorzugt dazu eingerichtet sein, autonom einer Anomalie 19 auszuweichen und/oder diese anzusteuern. Alternativ oder zusätzlich kann dem Fahrzeugführer eine visuelle oder akustische Warnmeldung und/oder eine Anweisung zum Steuern angezeigt werden.

Bevorzugt ist mindestens einer der weiterverarbeitbaren Bilddatensätze 20 von der landwirtschaftlichen Arbeitsmaschine 2 zur Umfelderkennung, insbesondere zur Identifizierung von Anomalien 19 im Vorfeld 9, verwendbar. Indem den Klassen 18 zuvor die Anomalien 19 zugeordnet sind, werden vorzugsweise mit der Klassifizierung gleichzeitig die Anomalien 19 erfasst und insbesondere automatisch identifiziert werden. Vorzugsweise wird ein Teil oder die gesamte Umgebung 8, insbesondere das Vorfeld 9, auf einem Display der landwirtschaftlichen Arbeitsmaschine 2 dargestellt. Die Darstellung kann bevorzugt als eingefärbtes Bild 7 der Kamera 4 und/oder bevorzugt als schematische Sicht von oben, insbesondere als Occupancy Grid 52, dargestellt sein, wobei die Anomalien 19 ebenfalls eingefärbt sind. Die Einfärbung erfolgt nach Klassen 18 und/oder Anomalien 19, sodass die Klassen 18 und/oder Anomalien 19 auf einfache Weise unterscheidbar sind.

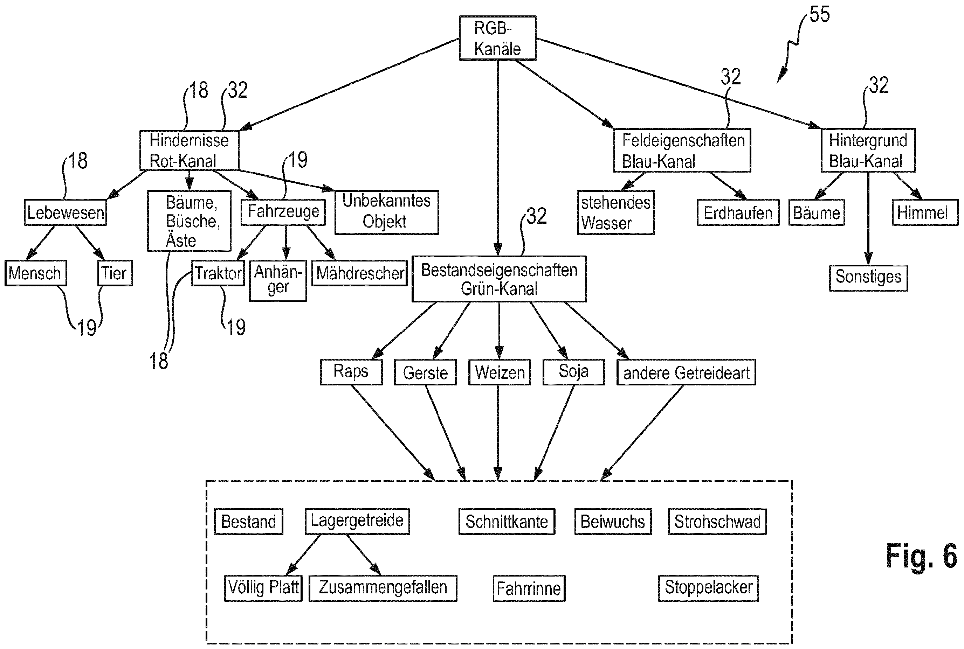

Fig. 6 zeigt eine beispielhafte schematische Einteilung von Klassen 18. Es liegt im Rahmen der Erfindung eine andere Einteilung der Klassen 18 vorzunehmen. Die Klassen 18 sind vorzugsweise in einer Klassengliederung 55 strukturiert. Sie weist mehrere Gliederungsebenen auf. Vorzugsweise weisen die Klassen Himmel, verschiedene Getreidearten wie zum Beispiel Raps und/oder Weizen, Bestandsdichten, verschiedene Anomalien 19 und weiteres auf. Bevorzugt sind die Klassen 18, die zugeordneten Segmentmerkmale 45 und/oder die Klassengliederung 55 in einer Datenbank gespeichert, auf die das Bildverarbeitungssystem 1, insbesondere die Support Vector Machine, für die Klassifizierung zugreift. Des Weiteren sind den Klassen 18 vorzugsweise die Anomalien 19 zugeordnet. Insbesondere sind sie aufgrund ihrer Form, Größe, Struktur, Materialen, Bestandteilen, Position, Helligkeit, Farbe und/oder einem erforderlichem Steuerungsverhalten der landwirtschaftliche Arbeitsmaschine 2 und/oder ihrer Arbeitsorgane den Klassen 18 zugeordnet. Eine Anzahl an Klassen 18 und/oder Anomalien 19 ist vorzugsweise erweiterbar.

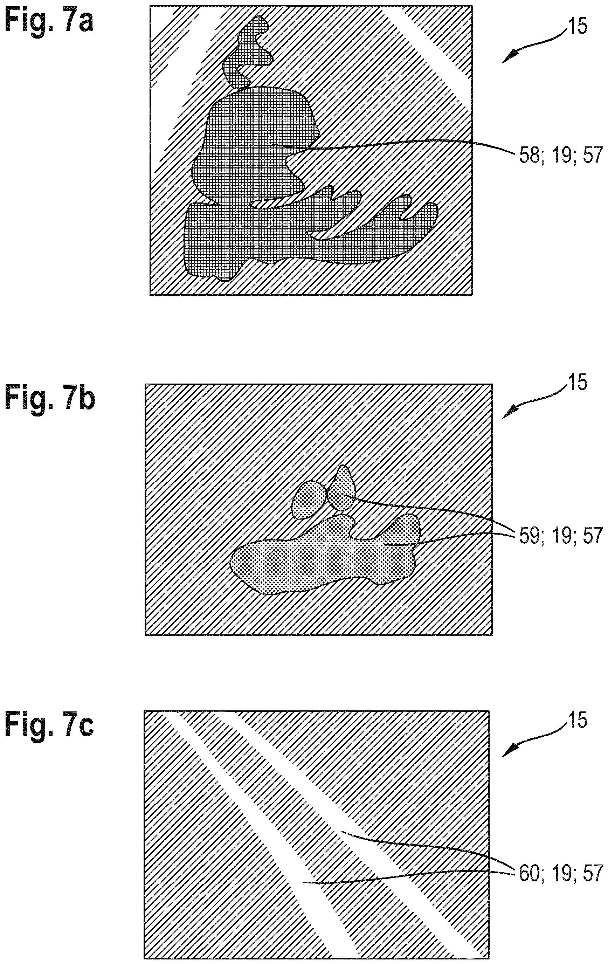

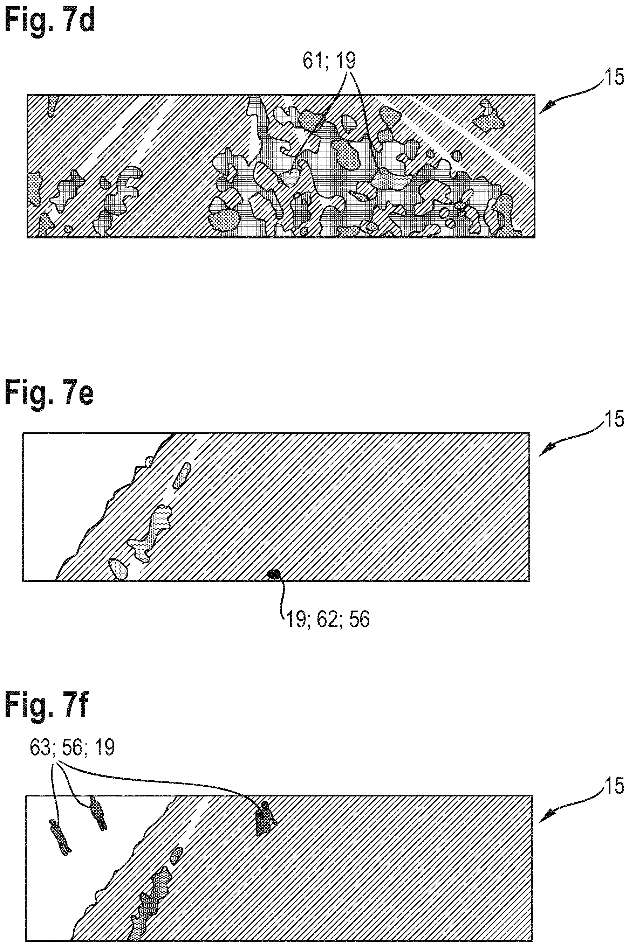

Fig. 7 zeigt eine schematische Darstellung von Anwendungen des Bildverarbeitungssystems 1 zur Identifikation von beispielhaft ausgewählten Anomalien 19. Anomalien 19 sind vorzugsweise Objekte 30 in der Umgebung 8, die direkten Einfluss auf den Betrieb der landwirtschaftlichen Erntemaschine 2 haben. In einer bevorzugten Ausgestaltung umfassen die Anomalien 19 Hindernisse 56 und/oder Unregelmäßigkeiten im dem Erntebestand 57. Des Weiteren umfassen sie vorzugsweise auch Bestand und Stoppelfeld.

Unregelmäßigkeiten im dem Erntebestand 57 umfassen im Wesentlichen flächige Änderungen von Höhe und/oder Ausrichtung von Pflanzenhalmen des Erntebestandes.

Insbesondere umfassen Unregelmäßigkeiten im dem Erntebestand 57 Lagergetreide 58 (Fig. 7a), Bestandslücken 59 (Fig. 7b), Fahrspuren 60 (Fig. 7c), Beiwuchs 61 (Fig. 7d) und/oder Bestandskanten (nicht dargestellt).

Hindernisse 56 umfassen insbesondere Objekte 30, mit denen die landwirtschaftliche Arbeitsmaschine 2, insbesondere Ihre Anbaugeräte 22, kollidieren könnte und dadurch die landwirtschaftlichen Arbeitsmaschine 2, das Anbaugerät und/oder ihre Arbeitsorgane beschädigt werden könnten. Sie umfassen auch unbekannte Objekte.
Unbekannte Objekte umfassen sämtliche Objekte 30, für die die Support Vector Machine keine der vorhandenen Klassen eindeutig, das heißt mit einer ausreichend hohen Wahrscheinlichkeit, zuordnen konnte. Insbesondere zählen hierzu unbekannte Hindernisse 56, auf die die Support Vector Machine nicht trainiert ist. Zudem umfassen Hindernisse 56 Tiere und Menschen, die bei Kollision Verletzungen an den Tieren und/oder Menschen hervorrufen würden und des Weiteren bereits geerntetes Erntegut kontaminieren würden. Des Weiteren umfassen Hindernisse 56 Fahrzeuge oder Vorrichtungen, mit denen die landwirtschaftliche Arbeitsmaschine 2 im Rahmen des Ernteprozesses interagiert, so zum Beispiel ein Transportfahrzeug beim Überladen von Erntegut auf dieses. Die Hindernisse 56 umfassen kleine, mittelgroße und/oder große Hindernisse 56. Bevorzugt gliedern sich die Hindernisse 56 in niedrige Hindernisse 62 und/oder hohe Hindernisse 63, wobei niedrige Hindernisse 62 insbesondere durch Hebung des Anbaugerätes 22 ohne Beschädigung der landwirtschaftlichen Arbeitsmaschine 2 passiert werden können und hohe Hindernisse 63 insbesondere ein Ausweichen oder Stoppen der landwirtschaftlichen Arbeitsmaschine 2 erfordern. Niedrige Hindernisse 62 umfassen zum Beispiel Autoreifen, niedrige Felsen, Erdhaufen, und/oder Kleintiere, wie zum Beispiel Hasen. Hohe Hindernisse 63 umfassen hingegen Bäume, große Felsen, Gewässer, Menschen, größere Tiere, wie zum Beispiel Rehe, andere landwirtschaftliche Arbeitsmaschinen 2 und/oder Masten. Weitere Hindernisse 56 sind hier ebenfalls denkbar. Zur Erfassung der Anomalien 19 wird die Support Vector Machine vorzugsweise mit den entsprechenden Anomalien 19 zuvor, insbesondere ab Werk, trainiert. Die identifizierten Anomalien 19 werden vorzugsweise dem Fahrzeugführer, insbesondere farblich unterscheidbar, angezeigt und/oder zur Steuerung der der landwirtschaftlichen Arbeitsmaschine 2 und/oder ihrer Arbeitsorgane verwendet. So kann die landwirtschaftliche Arbeitsmaschine 2 dazu eingerichtet sein, unter anderem selbsttätig eine Fahrspur 60 zu halten, einem Hindernis 56 auszuweichen, ein Anbaugerät 22 über ein Hindernis 56 zu heben und/oder zu stoppen.
Bei der bevorzugten farblichen unterscheidbaren Anzeige der Anomalien 19 sind den Anomalien 19, vorzugsweise unabhängig von Ihrer Einteilung in die Klassen, Farben zugewiesen. Beispielsweise werden sämtliche hohe Hindernisse 63 in rot und sämtliche niedrigen Hindernisse 62 in orange dargestellt.

### Bezugszeichenliste

- 1: Bildverarbeitungssystem
- 2: Landwirtschaftliche Arbeitsmaschine
- 3: Optischer Sensor
- 4: Kamera
- 5: Radarsensor
- 6: Laserscanner
- 7: Bild
- 8: Umgebung
- 9: Vorfeld
- 10: Bereich des Anbaugerätes
- 11: Fahrtrichtung
- 12: Akquirierte Bilder
- 13: Vorverarbeitete Bilder
- 14: Segmentierte Bilder
- 15: Klassifizierte Bilder
- 16: Segmente
- 17: Bildanalyseeinheit
- 18: Klassen
- 19: Anomalien
- 20: Weiterverarbeitbarer Bilddatensatz
- 21: Datenausgabeeinheit
- 22: Anbaugerät
- 27: Intensitätsnormierung
- 28: Farbnormierung
- 29: Auswertbereich
- 30: Objekt
- 31: Pixel
- 32: Bayer-Pixelmuster
- 33: Referenzbild
- 34: Referenzobjekt
- 35: Intensität
- 44: Klassengrenze
- 45: Segmentmerkmale
- 47: Mehrdimensionaler Segmentmerkmalsraum
- 48: Klassifiziertes Segment
- 49: Falsche Klassifizierung
- 51: Warpen
- 52: Occupancy Grid
- 55: Klassengliederung
- 56: Hindernis
- 57: Unregelmäßigkeiten im Erntebestand
- 58: Lagergetreide
- 59: Bestandslücken
- 60: Fahrspur
- 61: Beiwuchs
- 62: Niedriges Hindernis
- 63: Hohes Hindernis
- S1: Erster Schritt
- S2: Weitere Schritt
- S3: Nächster Schritt
- S4: Folgender Schritt

## Patentansprüche

1. Bildverarbeitungssystem (1) zumindest eine Auswahl verfügbarer Bilder (7), eine Bildanalyseeinheit (17) und eine Datenausgabeeinheit (21) umfassend,
**dadurch gekennzeichnet, dass**
das Bildverarbeitungssystem (1) eine Anzahl von Bildern (7) akquiriert,
die akquirierten Bilder (12) in einem ersten Schritt (S1) vorverarbeitet,
in einem weiteren Schritt (S2) die vorverarbeiteten Bilder (13) segmentiert,
und die entstehenden Segmente (16) in einem nächsten Schritt (S3) klassifiziert, sodass Anomalien (19) identifizierbar sind,
und in einem folgenden Schritt (S4) einen weiterverarbeitbaren Bilddatensatz (20) generiert.

2. Bildverarbeitungssystem (1) nach Anspruch 1,
**dadurch gekennzeichnet, dass**
die Bilder (7) von mindestens einem optischen Sensor (3), insbesondere mindestens einer Kamera (4), wobei die mindestens eine Kamera (4) als eine Monochromkamera, eine Infrarotkamera und/oder als eine Farbkamera ausgebildet ist, erzeugt werden.

3. Bildverarbeitungssystem (1) nach Anspruch 2,
**dadurch gekennzeichnet, dass**
der mindestens eine optische Sensor (3) mindestens einen Laserscanner (6) und/oder mindestens einen Radarsensor (5) umfasst.

4. Bildverarbeitungssystem (1) nach einem der vorhergehenden Ansprüche,
**dadurch gekennzeichnet, dass**
jedes Bild (7) aus Pixeln (31) aufgebaut ist,
und jedes Pixel (31) eine Intensität (35) aufweist,
wobei insbesondere jedes Pixel (31) ein Monochrompixel oder ein Farbpixel ist,
wobei gleiche Farbpixel des Bildes (7) jeweils einem Farbkanal des Bildes (7) zugeordnet sind und/oder Monochrompixel des Bildes (7) einem Graukanal des Bildes (7) zugeordnet sind,
und aus den Intensitäten (35) unterschiedlicher Farbpixel Farben ausbildbar sind, wobei jede Farbe zu einem Grauwert umwandelbar ist.

5. Bildverarbeitungssystem (1) nach einem der vorhergehenden Ansprüche,
**dadurch gekennzeichnet, dass**
in dem ersten Schritt (S1) das Vorverarbeiten der akquirierten Bilder (12) mindestens eine Normierung der akquirierten Bilder (12), insbesondere eine Intensitätsnormierung (27) und/oder eine Farbnormierung (28), und/oder eine Auswahl eines Auswertebereichs (29) in den akquirierten Bildern (12) umfasst.

6. Bildverarbeitungssystem (1) nach Anspruch 5,
**dadurch gekennzeichnet, dass**
bei der Intensitätsnormierung (27) jeweils ein pixelspezifischer Intensitätskorrekturfaktor für jedes Pixel (7) mittels mindestens eines Referenzbildes (33) bestimmt wird, und die Intensität (35) jedes Pixels (31) der akquirierten Bilder (12) mit dem jeweiligen pixelspezifischen Intensitätskorrekturfaktor korrigiert wird.

7. Bildverarbeitungssystem (1) nach Anspruch 5,
**dadurch gekennzeichnet, dass**
bei der Farbnormierung (28) jeweils ein Intensitätskorrekturwert für jeden Farbkanal der akquirierten Bilder (12) ermittelt wird und die Intensitäten (35) der Pixel (31) jedes Farbkanals einheitlich um den jeweiligen Intensitätskorrekturwert korrigiert wird, wobei jeder Intensitätskorrekturwert mittels Bestimmung einer Differenz der gemessenen jeweiligen Intensitäten (35) der dem jeweiligen Farbkanal zugeordneten Farbpixel eines Referenzobjekts (34) mit bekannter Farbe in den akquirierten Bildern (12) zu den bekannten jeweiligen Intensitäten (35) der dem jeweiligen Farbkanal zugeordneten Farbpixel eines Referenzobjekts (34) mit bekannter Farbe in den akquirierten Bildern (12) ermittelt wird,
wobei die gemessenen jeweiligen Intensitäten (35) insbesondere aus einer Auswahl von Farbpixel des Referenzobjekts (34) mit bekannter Farbe und durch Bildung eines Mittelwerts aus ihnen ermittelt werden.

8. Bildverarbeitungssystem (1) nach Anspruch 5,
**dadurch gekennzeichnet, dass**
die Auswahl des Auswertebereichs (29) der akquirierten Bilder (12) jeweils einen Ausschnitt der akquirierten Bilder (12) umfasst, wobei der Auswertebereich (29) sich insbesondere bis zu einer Entfernung von weniger als 20 Metern zum optischen Sensor (3), weiterhin insbesondere bis zu einer Entfernung von sechs Metern zum optischen Sensor (3), erstreckt.

9. Bildverarbeitungssystem (1) nach einem der vorhergehenden Ansprüche,
**dadurch gekennzeichnet, dass**
das Bildverarbeitungssystem (1) in dem weiteren Schritt (S2) die vorverarbeiteten Bilder (13) in Segmente (16) mit Pixeln (31) gleicher und/oder ähnlicher Farbe und/oder Intensität (35) segmentiert, insbesondere mittels eines Superpixel-Verfahrens, weiterhin insbesondere mittels eines SEED-Superpixel-Verfahrens.

10. Bildverarbeitungssystem (1) nach einem der vorhergehenden Ansprüche,
**dadurch gekennzeichnet, dass**
das Bildverarbeitungssystem (1) in dem nächsten Schritt (S3) die Segmente (16) in der Weise klassifiziert, dass es zunächst aus jedem Segment (16) jeweils mindestens ein Segmentmerkmal (45) berechnet.

11. Bildverarbeitungssystem (1) nach Anspruch 10,
**dadurch gekennzeichnet, dass**
das mindestens eine Segmentmerkmal (45) aus den jeweiligen Intensitäten (35) der Pixel (31) des jeweiligen Segments (16), und/oder aus den Grauwerten der Pixel (31) des jeweiligen Segments (16) berechnet wird.

12. Bildverarbeitungssystem (1) nach Anspruch 10 und/oder Anspruch 11,
**dadurch gekennzeichnet, dass**
die Segmentmerkmale (45) eine kleinste Intensität des jeweiligen Segments (16), eine größte Intensität des jeweiligen Segments (16), eine Differenz aus der größten und der kleinsten Intensität (16) des jeweiligen Segments (16), ein Histogramm des jeweiligen Segments (16), einen horizontalen Intensitätsgradienten des jeweiligen Segments (16), einen vertikalen Intensitätsgradienten des jeweiligen Segments (16), ein Histogramm des vertikalen und/oder des horizontalen Intensitätsgradienten des jeweiligen Segments (16), und/oder mindestens einen Intensitätsmittelwert des jeweiligen Segments (16), insbesondere einen arithmetischen Intensitätsmittelwert und/oder einen Intensitätsmedian des jeweiligen Segments (16) umfassen.

13. Bildverarbeitungssystem (1) nach Anspruch 10 und/oder Anspruch 11,
**dadurch gekennzeichnet, dass**
eine Auswahl an Segmentmerkmalen (16) aus einer Grauwertematrix des jeweiligen Segments (16) berechnet wird, insbesondere eine Homogenität, eine Energie, eine Korrelation und/oder ein Kontrast der Grauwertematrix, wobei die Grauwertematrix eine Häufigkeit einer Paarung der Intensitätsbereiche und/oder der Grauwertbereiche zweier benachbarter Pixel (31) des jeweiligen Segments (16) aufweist.

14. Bildverarbeitungssystem (1) nach Anspruch 10 und/oder Anspruch 11,
**dadurch gekennzeichnet, dass**
die Segmentmerkmale (45) eine vertikale Position im segmentierten Bild (14) und/oder einen Formschwerpunkt des Segments (16) umfassen.

15. Bildverarbeitungssystem (1) nach einem der vorhergehenden Ansprüche,
**dadurch gekennzeichnet, dass**
das Bildverarbeitungssystem (1) in dem nächsten Schritt (S3) mittels einer Support Vector Machine, wobei die Support Vector Machine ein mathematisches Verfahren zum Klassifizieren von Segmenten (16) ist, jedes Segment (16) mittels des mindestens einen berechneten Segmentmerkmals (45) in eine Klasse (18) klassifiziert und klassifizierte Bilder (15) mit klassifizierten Segmenten (48) erzeugt werden.

16. Bildverarbeitungssystem (1) nach Anspruch 15,
**dadurch gekennzeichnet, dass**
vorab eine Klassifikationsgüte der Segmentmerkmale (45) für die jeweiligen Klassen (18) bestimmt und zur Auswahl der geeignetsten Segmentmerkmale (45) für die Support Vector Machine verwendet wird, und
die Support Vector Machine Segmentmerkmale (45) mit einer hohen Klassifikationsgüte, insbesondere mit der höchsten Klassifikationsgüte, zur Klassifizierung der Segmente (16) verwendet,
und insbesondere die Wahrscheinlichkeiten für eine richtige Klassifizierung für jedes Segmentmerkmal (45) und/oder Segment (16) berechnet werden.

17. Bildverarbeitungssystem (1) nach einem der vorhergehenden Ansprüche,
**dadurch gekennzeichnet, dass**
das Bildverarbeitungssystem (1) in dem nächsten Schritt (S3) nach der Klassifizierung der Segmente (16) die Klassifizierungen nachverarbeitet, wobei falsche Klassifizierungen (49) und/oder Klassifizierungen mit berechneten niedrigen Wahrscheinlichkeiten gelöscht werden, wobei zur Identifizierung falscher Klassifizierungen (49) mehrere direkt aufeinanderfolgende klassifizierte Bilder (15) mit klassifizierten Segmenten (48) verglichen werden, und Klassifizierungen von Segmenten (16), die nur in einem einzelnen klassifizierten Bild (15) vorhanden sind, als falsch gewertet werden.

18. Bildverarbeitungssystem (1) nach einem der vorhergehenden Ansprüche,
**dadurch gekennzeichnet, dass**
jeder Klasse (18) mindestens ein Segmentmerkmal (45) zugeordnet ist.

19. Bildverarbeitungssystem (1) nach einem der vorhergehenden Ansprüche,
**dadurch gekennzeichnet, dass**
das Bildverarbeitungssystem (1) in dem folgenden Schritt (S4) aus den klassifizierten Bildern (15) mit den klassifizierten Segmenten (48) mittels Warpen (51), Stitching und/oder eines Übertrags in ein Occupancy Grid (52) einen weiterverarbeitbaren Bilddatensatz (20) generiert.

20. Bildverarbeitungssystem (1) nach einem der vorhergehenden Ansprüche,
**dadurch gekennzeichnet, dass**
der weiterverarbeitbare Bilddatensatz (20) mit Datensätzen anderer Sensoren, insbesondere optischer Sensoren (3), zusammengeführt und zu einem weiteren weiterverarbeitbaren Bilddatensatz (20) weiterverarbeitet wird.

21. Bildverarbeitungssystem (1) nach einem der vorhergehenden Ansprüche,
**dadurch gekennzeichnet, dass**
die Datenausgabeeinheit (21) dazu eingerichtet ist, mindestens einen der weiterverarbeitbaren Bilddatensätze (20) anderen Systemen einer landwirtschaftlichen Arbeitsmaschine (2), insbesondere einer Regel- und Steuereinheit, zur Verfügung zu stellen und dass der mindestens eine weiterverarbeitbare Bilddatensatz (20) insbesondere dazu verwendbar ist, die landwirtschaftliche Arbeitsmaschine (2) und/oder ihre Arbeitsorgane zu steuern.

22. Bildverarbeitungssystem (1) nach einem der vorhergehenden Ansprüche,
**dadurch gekennzeichnet, dass**
mindestens einer der weiterverarbeitbaren Bilddatensätze (20) von der landwirtschaftlichen Arbeitsmaschine (2) zur Umfelderkennung, insbesondere zur Identifizierung von Anomalien (19) im Vorfeld (9), verwendbar ist.

23. Bildverarbeitungssystem (1) nach einem der vorhergehenden Ansprüche,
**dadurch gekennzeichnet, dass**
die Anomalien (19) Hindernisse (56) und/oder Unregelmäßigkeiten im dem Erntebestand (57) umfassen und Klassen (18) zugeordnet sind, wobei Unregelmäßigkeiten im dem Erntebestand (57) Lagergetreide (58), Bestandslücken (59), Fahrspuren (60), Beiwuchs (61) und/oder Bestandskanten umfassen, und Hindernisse (56) niedrige und/oder hohe Hindernisse (62,63) umfassen, wobei niedrige Hindernisse (62) durch Hebung eines Anbaugerätes (22) ohne Beschädigung der landwirtschaftlichen Arbeitsmaschine (2) passiert werden können und hohe Hindernisse (63) ein Ausweichen der landwirtschaftlichen Arbeitsmaschine (2) erfordern.
